# EUROPÄISCHE PATENTSCHRIFT

(11) **EP 0 965 376 B1**
(45) Veröffentlichungstag und Bekanntmachung des Hinweises auf die Patenterteilung: **25.10.2000**
(21) Anmeldenummer: 98110948.1
(22) Anmeldetag: 16.06.1998
(51) Int. Cl.: B01D 29/25, F02M 37/22

(54) **Stabförmiger Rohrfilter für Fluid-Leitungen, insbesondere in Brennkraftmaschinen**
Tubular rod-like filter for fluid conduits, in particular for combustion engines
Filtre tubulaire en forme de tige pour conduites à fluides, en particulier pour moteurs à combustion

(43) Veröffentlichungstag der Anmeldung: 22.12.1999
(73) Patentinhaber: Ford Global Technologies, Inc., A subsidiary of Ford Motor Company, Dearborn, Michigan 48126 (US)
(72) Erfinder: Kuhlbach, Kai, 50679 Koeln (DE); Steinberg, Rainer, 51381 Leverkusen (DE); Limbach, Sigurd, 42657 Solingen (DE); McCarthy, Thomas, Dearborn, Mich. 48124 (US); Schamel, Andreas, 53227 Bonn (DE); Puetz, Bernhard, 53177 Bonn-Bad Godesberg (DE); Bingen, Guido, 51149 Koeln (DE); Lenz, Ingo, 50933 Koeln (DE)
(74) Vertreter: Messulam, Alec Moses

(56) Entgegenhaltungen:
- DE-B- 1 203 044
- DE-C- 958 886
- DE-C- 3 718 068
- FR-A- 2 640 693

## Beschreibung

Die Erfindung bezieht sich auf ein stabförmiges Rohrfilter für Fluid-Leitungen, insbesondere in Brennkraftmaschinen, der im Oberbegriff des Patentanspruches 1 erläuterten Art.

Aus der DE 37 18 068 C1 ist ein stabförmiges Rohrfilter für Fluid-Leitungen, insbesondere in Brennkraftmaschinen bekannt, bei dem ein von innen nach außen durchströmtes feinmaschiges Rohrfilterelement eine Bypass-Funktion bei zugesetztem Filterelement bereitstellt.

Das bekannte stabförmige Rohrfilter für Fluid-Leitungen, insbesondere in Brennkraftmaschinen, ist hierbei mit einem sich innerhalb des Rohrfilterelementes erstreckenden Bypass-Rohr mit einem sich in Strömungsrichtung entgegen einer Federkraft öffnenden Ventil versehen, das in Höhe des Strömungseinganges des Rohrfilterelementes liegt.

Das bekannte stabförmige Rohrfilter für Fluid-Leitungen, insbesondere in Brennkraftmaschinen, weist den Nachteil auf, daß durch das Bypass-Rohr und das Ventil der bauliche Aufwand erhöht wird.

Die Aufgabe der Erfindung ist es, ein stabförmiges Rohrfilter für Fluid-Leitungen, insbesondere in Brennkraftmaschinen, derart zu verbessern, daß bei einfachem Bauaufwand des Filters dennoch die erwünschte Bypass-Funktion bei zugesetztem Filterelement bereitgestellt wird - bei Normalbedingungen jedoch eine 100%ige Filterung bewirkt (d.h. der Bypass-Volumenstrom im normalen Betrieb des Filters gleich Null) gehalten wird.

Gemäß der Erfindung wird diese Aufgabe gelöst, indem bei einem stabförmigen Rohrfilter für Fluid-Leitungen, insbesondere in Brennkraftmaschinen, der im Oberbegriff des Patentanspruches erläuterten Art, die im Kennzeichenteil des Patentanspruches aufgezeigten Merkmale vorgesehen werden.

Dadurch, daß das mit seinem Einlaßende in bekannter Weise abgedichtet in die Fluid-Leitung eingesetzte feinmaschige Rohrfilterelement im Abstand zur Fluid-Leitungswandung liegend angeordnet ist und mit seinem Auslaßende über Abstandshalter im Abstand zur Fluid-Leitungswandung gehalten ist und hier Bypass-Öffnungen aufweist, die vom Innenbereich des Rohrfilterelementes zum Außenbereich führen und wobei die Abzweigung für die mit dem gefilterten Fluid zu versorgende Einrichtung in einem erheblichen Abstand stromauf zum Auslaßende vom Außenbereich abzweigt, wird ein stabförmiges Rohrfilter für Fluid-Leitungen, insbesondere in Brennkraftmaschinen, geschaffen, das ohne den baulichen Aufwand eines Bypass-Rohres und eines Ventiles die gewünschte und erforderliche Bypass-Funktion bei in seltenen Störfällen zugesetztem Filterelement bereitstellt.

Die Erfindung wird anhand eines in den beiliegenden Zeichnungen gezeigten Ausführungsbeispieles näher erläutert. Es zeigt:
- Fig. 1: einen Teilschnitt durch eine Fluid-Leitung in einer Brennkraftmaschine mit einem eingesetzten erfindungsgemäßen stabförmigen Rohrfilter in Seitenansicht;
- Fig. 2: einen Schnitt durch ein erfindungsgemäßes stabförmiges Rohrfilter;
- Fig. 3: eine vergrößerte Darstellung des Einlaßendes im Kreis III in Fig. 2 und
- Fig. 4: eine vergrößerte Darstellung des Auslaßendes im Schnitt IV-IV in Fig. 2.

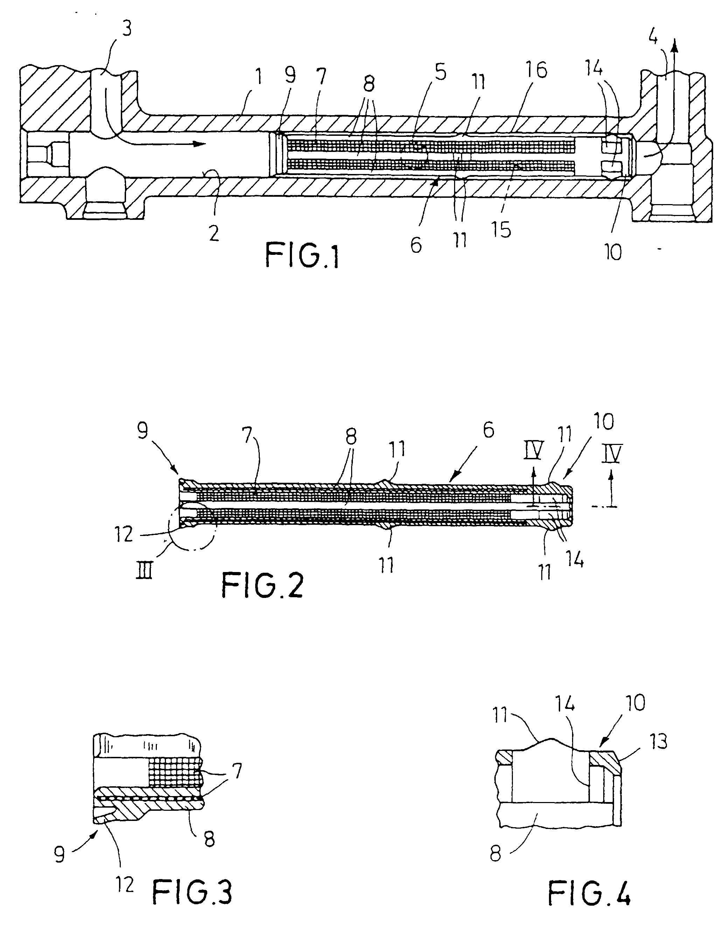

In Fig. 1 ist ein Teil 1 einer Brennkraftmaschine im Schnitt gezeigt, in der eine Fluid-Leitung 2 ausgebildet ist, die zur Verteilung eines Fluids, wie z.B. des Schmieröls der Brenn-kraftmaschine dient und die von einer Einlaßseite Pfeil 3 zu einer Auslaß seite Pfeil 4 mit dem Fluid versorgt wird.

Im Bereich der Fluid-Leitung 2 ist eine Abzweigung 5 für ein Aggregat der Brenn kraftmaschine vorgesehen, das mit besonders fein gefiltertem Fluid bzw. Schmieröl der Brennkraftmaschine versorgt werden muß.

Gemäß der Erfindung wird in der Fluid-Leitung 2 ein erfindungsgemäßes stabförmiges Rohrfilter 6 angeordnet, dessen Aufbau im Zusammenhang mit den Figuren 2 bis 4 näher erläutert wird.

Das stabförmige Rohrfilter 6 besteht im wesentlichen aus einem feinmaschigen Rohrfilterelement 7, das von Kunststoffmaterial umspritzt ist, welches Versteifungsstege 8, ein Einlaßende 9 und ein Auslaßende 10 bildet. Die Versteifungsstege 8 sind mit nokkenartigen Abstandshaltern 11 versehen, die das feinmaschige Rohrfilterelement 7 im Abstand zur Wandung der Fluid-Leitung 2 halten.

Das Einlaßende 9 des stabförmigen Rohrfilters 6 ist mit einer umlaufenden Dichtlippe 12 versehen, mit der es gegenüber der Wandung der Fluid-Leitung 2 abdichtet.

Das Auslaßende 10 des stabförmigen Rohrfilters 6 ist mit einer Konusfläche 13 versehen, mit der es gegen ein Absatzende der Fluid-Leitung 2 anliegt und weist darüber hinaus Bypass-Öffnungen 14 auf, die eine Verbindung vom Innenraum 15 des stabförmigen Rohrfilters 6 zum Außenraum 16 (siehe Fig. 1) herstellen.

Nachfolgend wird nun die Funktionsweise des erfindungsgemäßen stabförmigen Rohrfilters 6 erläutert.

Unter normalen Betriebsbedingungen, z.B. bei einer Schmieröltemperatur zwischen - 20° C und + 150° C erfolgt die Hauptströmung des Schmieröles durch den Innenraum 15 des stabförmigen Rohrfilters 6 und bei nicht zugesetztem feinmaschigen Rohrfilterelement 7 tritt ausreichend viel Schmieröl ausschließlich durch das Filtergewebe hindurch, so daß das an der Abzweigung 5 angeschlossene Aggregat zuverlässig und ausreichend mit dem fein gefilterten Schmieröl versorgt wird. Bei diesen Betriebsbedingungen tritt somit praktisch kein Überströmen von Schmieröl über die Bypass-Öffnungen 14 vom Innenraum 15 in den Außenraum 16 auf.

Bei extremen Betriebsbedingungen , z.B. bei einer Schmieröltemperatur von - 30° C kann das feinmaschige Rohrfilterelement 7 z.B. durch Vereisung zugesetzt sein und in diesem Fall sorgen die Bypass-Öffnungen 14 dafür, daß auch unter diesen Verhältnissen Schmieröl, zwar nicht gefiltert, aber in ausreichender Menge vom Innenraum 15 in den Außenraum 16 und über die Abzweigung 5 zu dem zu versorgenden Aggregat gelangen kann. Ein solches Aggregat, wie z.B. bei einer voll variablen Nokkenwellenverstellung (VCT) muß bei Betrieb der Brennkraftmaschine unbedingt funktionsfähig sein und die erwähnten Bypass-Öffnungen 14 stellen dies auch in Extremsituationen sicher.

Das Zusetzen des Filterelements durch Schmutzpartikel wird durch einen Selbstreinigungseffekt, welcher sich aufgrund des Durchspülvorgangs mittels des hohen Ölvolumenstroms in axialer Richtung des Filters einstellt, verhindert.

Nachdem die Betriebsbedingungen, bei denen sich das feinmaschige Rohrfilterelement 7 infolge extrem niedriger Betriebstemperaturen zusetzen würde, sehr selten sind, kann man davon ausgehen, daß während der gesamten Lebensdauer der Brennkraftmaschine es kaum einmal zu einem Schmierölübertritt über die Bypass-Öffnungen 14 kommt, so daß eine solche Phasenverstelleinrichtung für eine Nockenwelle, die unter Umständen sehr anfällig auf Schmutzpartikel reagiert, kaum einmal mit ungefiltertem Schmieröl versorgt würde.

## Patentansprüche

1. Stabförmiges Rohrfilter für Fluid-Leitungen, insbesondere in Brennkraftmaschinen, mit einem von innen nach außen durchströmten feinmaschigen Rohrfilterelement (7), das eine Bypass-Funktion bei zugesetztem Filterelement bereitstellt, wobei der stabförmige Rohrfilter (6) dazu geeignet ist um mit einem Einlaßende (9) dichtend in eine Fluid-Leitung (2) eingesetzt zu werden und das feinmaschige Rohrfilterelement (7) mit angeformten Versteifungsstegen (8) versehen ist,
**dadurch gekennzeichnet**, daß
- die Versteifungsstege aus Kunststoff bestehen und mit nockenförmigen Abstandshaltem (11) versehen sind, die dazu geeignet sind das feinmaschige Rohrfilterelement (7) im Abstand zur Wandung der Fluid-Leitung (2) unter Bildung eines Außenbereichs (16) zu halten,
- der stabförmige Rohrfilter (6) am Einlaßende (9) mit einer umlaufenden Dichtlippe (12) und am Auslaßende (10) mit einer Konusfläche (13) versehen ist und
- Bypass-Öffnungen (14) benachbart dem Auslaßende (10) angeordnet sind, die bei zugesetztem Rohrfilterelement (7) einen Übertritt von ungefiltertem Fluid vom Innenbereich (15) zum Außenbereich (16) ermöglichen.

## Claims

1. Rod-shaped pipe filter for fluid lines, particularly in internal combustion engines, with a fine-mesh pipe filter element (7) through which fluid flows from the inside to the outside, which provides a by-pass function when the filter element is blocked, the rod-shaped pipe filter (6) being suitable for being inserted with an inlet end (9) into a fluid line (2) in sealing manner and the fine-mesh pipe filter element (7) being provided with moulded-on stiffening webs (8),
characterised in that
- the stiffening webs consist of plastic and are provided with cam-shaped spacers (11) which are suitable for keeping the fine-mesh pipe filter element (7) at a distance from the wall of the fluid line (2), forming an outer region (16),
- the rod-shaped pipe filter (6) is provided at the inlet end (9) with a circumferential sealing lip (12) and at the outlet end (10) with a cone surface (13) and
- by-pass openings (14) are arranged adjacent to the outlet end (10), which by-pass openings permit an overflow of unfiltered fluid from the inner region (15) to the outer region (16) when the pipe filter element (7) is blocked.

## Revendications

1. Filtre tubulaire en forme de barre pour des conduites de fluide, notamment dans des moteurs à combustion interne, avec un élément filtrant tubulaire (7) à mailles fines, traversé par le flux de l'intérieur vers l'extérieur, qui fournit une fonction de dérivation lorsque l'élément filtrant est engorgé, le filtre tubulaire (6) en forme de barre étant conçu pour être inséré en étanchéité dans une conduite de fluide (2) par une extrémité d'admission (9), et l'élément filtrant tubulaire (7) à mailles fines étant pourvu de nervures de renforcement (8) rapportées,
**caractérisé** en ce que
- les nervures de renforcement sont réalisées en matière plastique et sont pourvues d'écarteurs (11) en forme d'ergots, qui sont conçus pour maintenir l'élément filtrant tubulaire (7) à mailles fines à distance de la paroi de la conduite de fluide (2) en formant une région extérieure (16),
- le filtre tubulaire (6) en forme de barre est pourvu d'une lèvre d'étanchéité entourante (12) à l'extrémité d'admission (9), et d'une face conique (13) à l'extrémité d'évacuation (10), et
- des ouvertures de dérivation (14) sont disposées au voisinage de l'extrémité d'évacuation (10), ouvertures qui permettent à du fluide non filtré de passer de la région intérieure (15) dans la région extérieure (16) lorsque l'élément filtrant tubulaire (7) est engorgé.
